## Europäisches Patentamt

## European Patent Office

## Office européen des brevets

(11) Publication number: **0 087 236**
**B1**

(12) **EUROPEAN PATENT SPECIFICATION**

(45) Date of publication of patent specification: **07.05.86**

(51) Int. Cl.⁴: **A 01 D 43/08,** A 01 D 43/06

(21) Application number: **83300591.1**

(22) Date of filing: **07.02.83**

(54) **Spout-aiming system for an agricultural machine.**

<table>
<tr><td>

(30) Priority: **09.02.82 US 347125**

(43) Date of publication of application:
**31.08.83 Bulletin 83/35**

(45) Publication of the grant of the patent:
**07.05.86 Bulletin 86/19**

(84) Designated Contracting States:
**AT BE CH DE FR GB IT LI NL SE**

(56) References cited:
**EP-A-0 070 015**
**US-A-3 786 945**
**US-A-4 042 132**

</td><td>

(73) Proprietor: **DEERE & COMPANY**
**1 John Deere Road**
**Moline Illinois 61265 (US)**

(72) Inventor: **Johnson, Stanley Jerome**
**2706 Cedar Heights Drive**
**Cedar Falls Iowa 50613 (US)**

(74) Representative: **Pears, David Ashley et al**
**REDDIE & GROSE 16 Theobalds Road**
**London WC1X 8PL (GB)**

</td></tr>
</table>

Courier Press, Leamington Spa, England.

## Description

The present invention relates to a spout-aiming system for an agricultural machine, comprising a sensor responsive to the angle between the machine and a towed wagon, and a servo-mechanism responsive to the sensor to cause the spout to swing relative to the machine in sympathy with the wagon. The machine may be a forage harvester.

Spout aiming systems of this kind are known and used to ensure that crop is discharged substantially centrally into the wagon, even when the machine and wagon are going through a turn (US—A—3 786 945 and US—A—4 042 132).

An improved system of the above kind is disclosed in our prior European Patent Application published 19th January 1983 under the number EP 0 070 015 and forming part of the state of the art solely by virtue of Article 54(3) EPC. In order to avoid excessive hunting of the servomechanism, it has low gain so long as the machine-wagon angle remains small. This allows some free play, i.e. a dead band, between the spout and the wagon. During straight line travel the operator can manually control the spout to obtain uniform filling of the wagon. At larger machine-wagon angles the servo gain is high to ensure that the spout follows the wagon through turns.

It has been found that, when coming out of a slowly negotiated turn, this previous control system can switch from its high to its low gain mode before the wagon has straightened out behind the machine, with the result that the spout is allowed to remain misaligned with respect to the wagon by a small amount. Although this small misalignment is not enough to cause crop spillage, it tends to cause uneven wagon filling when the machine repeatedly turns in one direction. Therefore, it is desired to provide a spout-aiming system which will return the spout to a centered or neutral position at the completion of a turning manoeuvre, while retaining the dual sensitivity feature of the servo-mechanism.

The system according to the invention is defined in claim 1 below.

The invention will now be described in more detail, by way of example, with reference to the accompanying drawings, in which:

Fig. 1 is an illustration depicting a typical agricultural machine, such as a forage harvester, with a crop-receiving wagon pivotally attached thereto.

Fig. 2 is a schematic representation of a spout-aiming control system.

Figs. 3a and 3b are detailed circuit schematics of portions 64a and 64b of a control unit for use as the control unit 64 of the control system shown in Fig. 2.

Fig. 4 is a detailed circuit schematic of a portion of a control unit constructed according to the present invention and adapted for use in the control unit of Fig. 2, along with the circuit 64a shown in Fig. 3a.

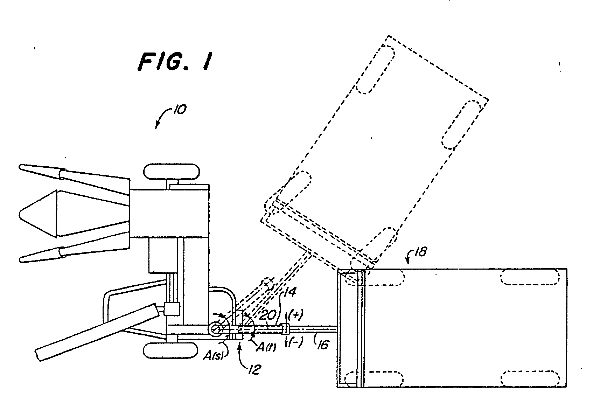

Fig. 1 shows a tractor-drawn forage harvester 10 which includes a drawbar 12 and a power-rotatable forage dispensing spout 14. The tongue 16 of a crop-receiving wagon 18 is coupled to the drawbar 12.

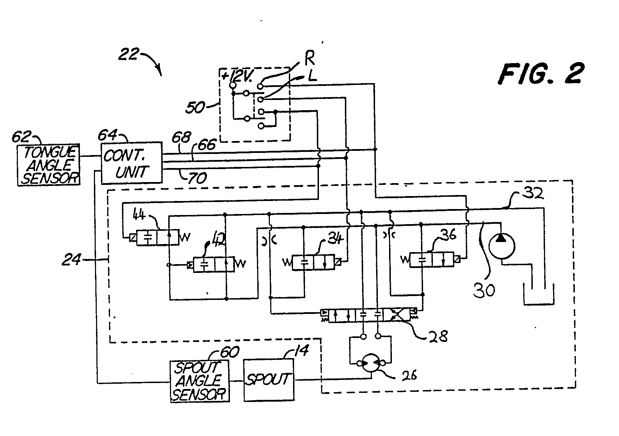

A spout-aiming control system 22 is shown in Fig. 2. For a full understanding of the control system 22, reference should be made to the aforementioned published application EP 0 070 015. Briefly, the control system 22 includes a hydraulic system 24 and a control unit 64 which operates to control the position of the spout 14 in response to signals from a spout angle sensor 60 (angle A(s)), a tongue angle sensor 62 (angle A(T)), and an operator-controlled switch 50.

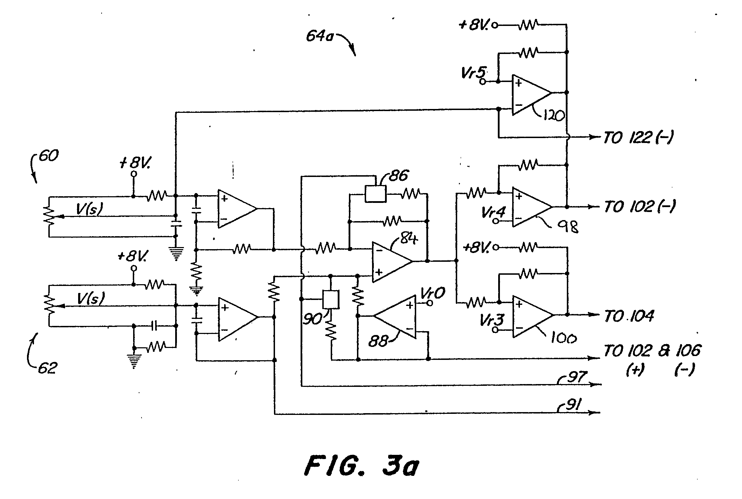

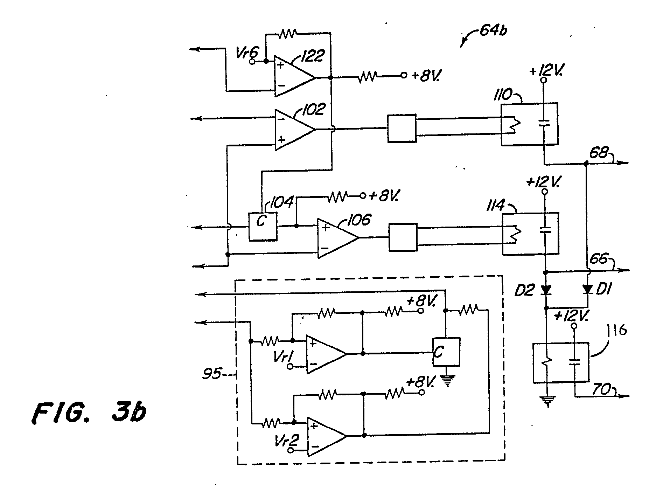

Figs. 3a and 3b show portions 64a and 64b respectively of the control unit 64 as fully described in the aforementioned published application. Briefly, the control circuits 64a and 64b comprise a dual gain or dual sensitivity control amplifier 84 which energizes either a relay 110 or a relay 114 to pivot the spout 14 via the hydraulic system 24 to maintain predetermined angular relationships between the spout 14 and the wagon tongue 16. The gain or sensitivity of the amplifier is dependent upon the signal applied to a line 97 by a switching circuit 94 and communicated to CMOS switches 86 and 90.

The relays 110 and 114 provide signals on lines 66 and 68 (Fig. 2) to open "left" and "right" solenoid valves 34 and 36 respectively.

A control system 22, schematically shown in Fig. 2, controls the position of the spout 14, either automatically or manually in response to control signals applied to a conventional electro-hydraulic circuit 24. Circuit 24 includes a conventional bi-directional fluid motor 26 for rotating the spout 14 either left or right, viewing Fig. 1, in response to fluid received from a pilot-operated directional control valve 28, connected to a pump-fed pressure line 30 and a sump line 32. Left and right solenoid-operated pilot valves 34 and 36 operate the directional control valve 28 in response to control signals applied to left and right control lines 66 and 68 respectively. For operating with an open-centre hydraulic system (not shown), the circuit 24 includes an optional pilot-operated bypass valve 42 controlled by a solenoid-operated valve 44 which receives control signals via a control line 70. It should be noted that it is within the scope of this invention to substitute an electric powered motor for the hydraulic motor servo circuit for the hydraulic circuit 24.

A manual directional control switch module 50 includes a double pole, double throw momentary-type switch 51 with both movable contacts connected to the +12 volt terminal of the vehicle battery. Left and right switch contacts are connected to the left and right control lines 66 and 68 respectively. Optional open centre contacts are both connected to the control line 70 so that the valve 44 is actuated to close the bypass valve 42 whenever the switch 51 is operated for left or right spout movement.

The error signal at the output of the amplifier 84 is applied to right and left comparator amplifiers whose outputs actuate relays 110 and 114 respectively via inverters 102, 106 to reduce the spout-tongue misalignment by servo action. The servo system has such hysteresis that the misalignment can increase to 18° before the servo acts (allowing for a wide range of operator control using the switch 5D) whereas, when the servo does act, it reduces misalignment to 2° before the relay 110 or 114 drops out.

The switching circuit 95 compares the tongue angle signal on a line 91 with thresholds such that the CMOS switches 86 and 90 are opened to increase the gain of the amplifier 84 when the tongue angle relative to the towing vehicle exceeds 11° either side of the fore-and-aft direction. Then the above-described servo action cuts in at a misalignment of 3° and cuts out when the misalignment has been reduced to 1/3°. The circuit 95 re-closes the switches 86 and 90 to revert to low gain when the tongue angle drops to 4°.

The amplifiers 120 and 122 and a CMOS switch 104 are concerned only in handling certain error conditions, as described in EP 0 070 015. When either relay 110 or 114 is closed, a relay 116 is closed to provide a signal on the line 70 closing the solenoid valve 44 and hence the by-pass valve 42.

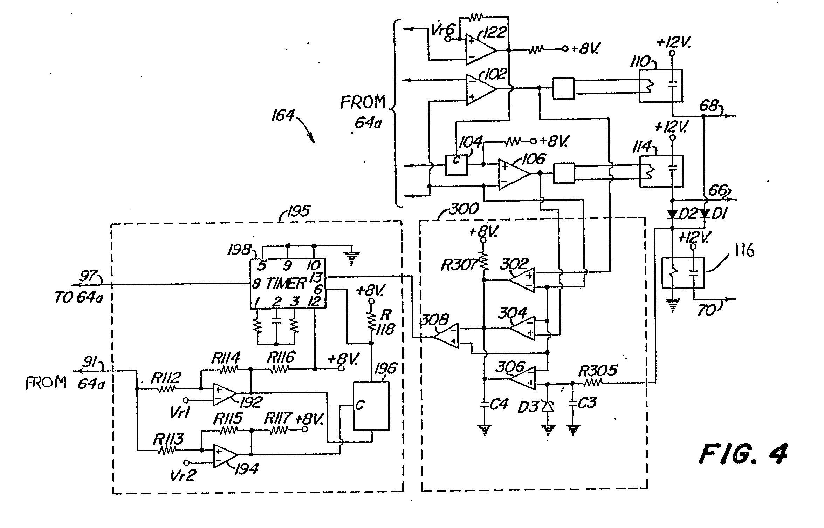

The present invention relates to the improved circuit 164 shown in Fig. 4, whereby the switching circuit 95 of Fig. 3b is replaced by a switching circuit 195, and wherein the circuit components within a block 300 are added to the circuit of Fig. 3b. The circuit 164 of Fig. 4, when coupled as indicated with the circuit portion 64a of Fig. 3a, constitutes an improved control unit or circuit for use as the control unit 64 of the control system shown in Fig. 2.

More specifically, the new circuit 195 includes a pair of comparators 192 and 194 with (+) inputs coupled to line 91 of the original circuit 64a via resistors R112 and R113. The (−) inputs of comparators 192 and 194 are coupled to reference voltages Vr1 and Vr2, respectively. The output of comparator 192 is coupled to its (+) input via resistor R114, to +8 volts via resistor R116, and to a terminal of CMOS switch 196. the output of comparator 194 is coupled to its (+) input via resistor R115, to +8 volts via resistor R117 and to the control terminal C of the CMOS switch 196.

The other terminal of the CMOS switch 196 is coupled to +8 volts via a resistor R118 and to pin 6 of a programmable timer 198, such as Motorola No. MC14541B. Pins 5, 9, and 10 of the programmable timer are grounded. Pins 1, 2 and 3 are coupled to an RC circuit which determines the time period required for timer 198 to time out, for example, 10 seconds when pin 13 is high. Pin 8 of timer 198 is coupled via line 97 to CMOS switches 86 to 90 of the portion of the circuit 64a shown in Fig. 3a. Pin 12 of timer 198 is coupled to +8 volts.

A gating circuit 300 includes a comparator 302 with a (+) input coupled to the output of the inverter 102 of the original circuit 64b. A comparator 304 has a (+) input coupled to the output of the buffer amplifier 106 of original circuit 64b. A comparator 306 has a (+) input coupled via resistor R305 to the common cathode connection of diodes D1 and D2 of the original circuit 64b, and to ground via a parallel connected voltage limiting zener diode D3 and capacitor C3. The (−) inputs of comparators 302, 304 and 306 are all coupled to the common connection between the (−) inputs of buffer amplifiers 88 and 106, thereby providing a reference voltage of approximately 3.5 volts to the (−) inputs of the comparators 302—306.

The outputs of comparators 302—306 are tied together, to ground via capacitor C4, to +8 volts via pull-up resistor R307 and to the (−) input of comparator 308. The (+) input of comparator 308 is coupled to the common connection between the (−) inputs of comparators 302—306. The output of comparator 308 is coupled to programming pin 13 of programmable timer 198.

When the harvester 10 and wagon 18 are coming out of a relatively gradual turn, the tongue angle will be decreasing as the wagon 18 begins to straighten out after the turn. At some tongue angle, for example 4° or 6°, the original gain control circuit 95 would immediately switch the system to its low sensitivity mode and the wagon tongue would continue to straighten out while the spout 14 would remain misaligned by this amount of 4° or 6°.

However, with new gain control or switching circuit 195, the pin 8 of timer 198 (and line 97) remain low so that the system remains in its high sensitivity mode for 10 seconds past the time which the tongue angle reaches the aforesaid 4° or 6° level. By remaining in this high sensitivity mode, the spout 14 will continue to track to within 1/3° of the wagon tongue 16 reaches its straight back position relative to the fore-and-aft axis 20 of the forage harvester 10.

When this 10 second delay period expires, pin 8 of timer 198 and line 97 go high to convert the system to its low gain, low sensitivity mode where larger free play between the spout 14 and the tongue 16 is permitted. The particular delay period may be modified, as desired, by coupling an appropriate RC network to pins 1, 2 and 3 of the timer 198.

This foregoing description applies when no manual operation of the switch 50 is occurring. However, in some circumstances, the operator may desire immediately to pivot the spout 14 manually with respect to the tongue 16 after coming out of a turn, without waiting for the system to switch to the low sensitivity mode after a 10 second delay period expires. Comparator logic circuit 300 permits the operator to pivot the spout 14 immediately relative to the tongue 16 (over an angle range which is larger than that which would be permitted when the system is in its high gain, high sensitivity operational mode) without waiting the 10 seconds normally required for timer 198 to switch the system to its low gain low sensitivity mode.

More particularly, when the output of inverters 102 and 106 are high and relays 110 and 114 are open (as would be the case when no automatic spout correction is being made) and when a voltage of +12 volts occurs at the common cathodes of diodes D1 and D2, (which therefore must be due to a manual closing of the switch 50), then the signal at the outputs of comparators 302, 304 and 306 and at the (−) input of comparator 308 goes high.

This causes the output of the comparator 308 to be low, thus applying a low level or zero signal to pin 13 of timer 198. The low level signal at pin 13 reduces the time delay provided by timer 198 from 10 seconds to approximately 40 milliseconds, so that, when the angle of the wagon tongue 16 with respect to the drawbar decreases to 4° or 6° for example, the control system switches almost immediately to its low gain or low sensitivity mode. This permits the operator to manually swing the spout 14 almost immediately without interference from the high sensitivity mode of the control system. Note that when the control system is making an automatic correction in the spout position, one or the other of the (+) inputs to the comparators 302, 304 will be low, thus holding the common outputs of comparators 302, 304 and 306 low. This forces the output of the comparator 308 and the pin 13 of the timer 198 high so that the timer 198 will be in its 10 second delay mode until the correction is completed and both (+) inputs of the comparators 302 and 304 are high.

When the harvester 10 and wagon 18 are entering a turn and the tongue angle is increasing, the timer 198 does *not* delay the switching of the system from its low sensitivity to its high sensitivity mode. In other words, when the tongue angle increases to an angle of 9° or 11° for example, pin 8 of timer 198 (and line 97) switches immediately from high to low to switch the system to its high gain, high sensitivity operational mode wherein the spout 14 is maintained closely aligned with the wagon tongue 16 to prevent crop spillage during the turn.

## Claims

1. A spout aiming system for an agricultural machine, comprising a sensor (62) responsive to the angle (A(t)) between the machine (10) and a towed wagon (18), and a servo-mechanism (64, 24) responsive to the sensor (62) to cause the spout (14) to swing relative to the machine in sympathy with the wagon, characterised by switching means (195) operative to switch the servo-mechanism to a second of two modes when the wagon-machine angle (A(t)) increases above a first threshold and to switch the servo-mechanism back to the first of the two modes in response to the wagon-machine angle falling below a second threshold, the first and second modes maintaining the spout-wagon misalignment within broad and narrow angular ranges respectively, and by delay means (198) providing a predetermined delay in the said switching back to the first mode.

2. A system according to claim 1, comprising manually-operable means (50) enabling the spout (14) to be manually positioned within the servo dead band when the first mode obtains, further characterised by means (300) arranged to reduce the said delay when the manually-operable means (50) are being actuated.

3. A system according to claim 1 or 2, characterised in that the delay means is an electronic timer (198) with a control input (6) receiving an input signal from a two-state switch (196) of the switching means (195) and a controlled output (8) connected to gain control means (86, 90) in the servo-mechanism (64, 24).

4. A system according to claims 2 and 3, characterised in that the electronic timer (198) has a programming input (13) connected to the means (300) which reduce the delay when the manually-operable means (50) is being actuated.

5. A system according to claims 1 to 4, characterised in that the servo-mechanism (64, 24) comprises a differential amplifier (84) providing an error signal in response to the difference between a signal (A(t)) from the wagon-machine angle sensor (62) and a signal (A(s)) from a spout angle sensor (60), and in that the switching means (195) are connected to a gain-control input (97) of the amplifier.

## Revendications

1. Système de commande d'orientation de la goulotte d'éjection pour machine agricole, comprenant un palpeur ou détecteur (62) réagissant à l'angle (A(t)) formé entre la machine (10) et une remorque (18) attelée à elle, et un servo-mécanisme (64, 24) réagissant au détecteur (62) pour provoquer le pivotement de la goulotte d'éjection (14) par rapport à la machine en concordance avec la remorque, caractérisé par des moyens de commutation (195) agissant pour commuter le servo-mécanisme en l'amenant au second de deux modes quand l'angle (A(t)) entre la remorque et la machine croît au delà d'un premier seuil, et pour commuter en retour le servo-mécanisme en le ramenant au premier des deux modes en réponse à une réduction de l'angle entre la remorque et la machine jusqu'à une valeur inférieure à un second seuil, le premier et le second modes maintenant le défaut d'alignement entre la goulotte d'éjection et la remorque dans des gammes large et étroite respectivement, et par des moyens de temporisation ou à retard (198) fournissant une temporisation ou un retard prédéterminé dans cette commutation en retour au premier mode.

2. Système suivant la revendication 1, comprenant des moyens pouvant être actionnés manuellement (50), permettant à la goulotte d'éjection (14) d'être positionnée à la main dans la plage d'absence de servo-commande quand le premier mode est enclenché, caractérisé en outre par des moyens (300) agencés de manière à réduire ce retard quand les moyens actionnables à la main (50) sont actionnés.

3. Système suivant la revendication 1 ou 2, caractérisé en ce que les moyens de temporisation sont formés par une minuterie électronique (198) comprenant une entrée de commande (6) recevant un signal d'entrée à partir d'un commutateur à deux états (196), des moyens de commutation (195) et une sortie commandée (8) connectée à des moyens de commande de gain (86, 90) prévus dans le servo-mécanisme (64, 24).

4. Système suivant les revendications 2 et 3, caractérisé en ce que la minuterie électronique (198) comprend une entrée de programmation (13) connectée aux moyens (300) qui réduisent le retard quand les moyens actionnables à la main (50) sont actionnés.

5. Système suivant l'une quelconque des revendications 1 à 4, caractérisé en ce que le servo-mécanisme (64, 24) comprend un amplificateur différentiel (84) fournissant un signal d'erreur en réponse à la différence entre un signal (A(t)) provenant du détecteur (62) d'angle entre la remorque et la machine et un signal (A(s)) provenant d'un détecteur (60) d'angle de la goulotte d'éjection, et en ce que les moyens de commutation (195) sont connectés à une entrée (97) de commande de gain de l'amplificateur.

**Patentansprüche**

1. Auswerfer-Zielsystem für eine landwirtschaftliche Maschine, welches einen Fühler (62) umfaßt, der auf den Winkel (A(t)) zwischen der Maschine (10) und einem gezogenen Wagen (18) anspricht, und einen Servomechanismus (64, 24), der auf den Fühler (62) anspricht, um den Auswerfer (14) zu veranlassen, relativ zur Maschine in Übereinstimmung mit dem Wagen zu schwingen, gekennzeichnet durch Schaltmittel (195), die so arbeiten, daß sie den Servomechanismus in eine zweite von zwei Einsatzarten umschalten, wen der Wagen-Maschinenwinkel (A(t)) über einen ersten Grenzwert ansteigt, und den Servomechanismus zurück in die erste der beiden Einsatzarten schaltet, und zwar in Reaktion darauf, daß der Wagen-Maschinenwinkel unter einen zweiten Grenzwert absinkt, wobei die ersten und die zweiten Einsatzarten die Ausrichtungsabweichung zwischen Auswerfer und Wagen innerhalb breiterer bzw. innerhalb engerer Winkelbereiche halten, und gekennzeichnet durch Verzögerungsmittel (198), die eine vorbestimmte Verzögerung in der Zurückschaltung auf die erste Einsatzart vorsehen.

2. System nach Anspruch 1, welches manuell betätigbare Mittel (50) umfaßt, welche es ermöglichen, daß der Auswerfer (14) manuell innerhalb des Servo-Totbereiches ausgerichtet wird, wenn die erste Einsatzart erhalten ist, gekennzeichnet weiter durch Mittel (300), die so angeordnet sind, daß sie die Verzögerung vermindern, wenn die manuell betätigbaren Mitel (50) betätigt werden.

3. System nach Anspruch 1 oder 2, dadurch gekennzeichnet, daß die Verzögerungsmittel aus einem elektronischen Zeitgeber (198) bestehen mit einem Kontrolleingang (6), der ein Eingangssignal von einem Zweistellungsschalter (196) der Schaltmittel (195) erhält, und einem kontrollierten Ausgang (8), der mit den Verstärkersteuermitteln (86, 19) in dem Servomechanismus (64, 24) verbunden sind.

4. System nach Anspruch 2 und 3, dadurch gekennzeichnet, daß der elektronische Zeitgeber (198) einen Programmeingang (13) aufweist, der mit den Mitteln (300) verbunden ist, welche die Verzögerung vermindern, wenn die manuell betätigbaren Mittel betätigt werden.

5. System nach Anspruch 1 bis 4, dadurch gekennzeichnet, daß der Servo-Mechanismus (64, 24) einen Differentialverstärker (84) umfaßt, der ein Fehlersignal in Abhängigkeit von der Differenz zwischen einem Signal (A(t)) von dem Wagen-Maschinenwinkel-Fühler (62) und einem Signal (A(s)) von einem den Auswerferwinkel erfassenden Fühler (60) liefert, und daß die Schaltmittel (195) mit einem Verstärkungskontrolleingang (97) des Verstärkers verbunden sind.

FIG. 1

FIG. 2

FIG. 3a

0 087 236

FIG. 3b

FIG. 4